# EUROPEAN PATENT SPECIFICATION

(11) **EP 3 146 024 B1**
(45) Date of publication and mention of the grant of the patent: **10.07.2019**
(21) Application number: 15721742.3
(22) Date of filing: 13.05.2015
(51) Int. Cl.: C10J 3/84, C10K 3/02, C10G 2/00, B01J 23/34, B01J 23/882, B01J 23/883

(54) **REDUCTION OR REMOVAL OF OXYGENATED HYDROCARBONS IN SYNGAS CONDITIONING**
ABREICHERUNG ODER ENTFERNUNG VON OXIDIERTEN KOHLENWASSERSTOFFEN IN DER SYNTHESEGASAUFBEREITUNG
RÉDUCTION OU ÉLIMINATION D'HYDROCARBURES OXYGÉNÉS DANS LE CONDITIONNEMENT D'UN GAZ DE SYNTHÈSE

(30) Priority: 20.05.2014 EP 14169063
(43) Date of publication of application: 29.03.2017
(73) Proprietor: Haldor Topsøe A/S, 2800 Kgs. Lyngby (DK)
(72) Inventor: HØJLUND NIELSEN, Poul Erik, DK-3480 Fredensborg (DK); KAARSHOLM, Mads Kristian, DK-2800 Kgs. Lyngby (DK); NIELSEN, Rasmus Munksgård, DK-2800 Kgs. Lyngby (DK); ANDERSSON, Klas Jerker, DK-2800 Kgs. Lyngby (DK)
(74) Representative: Haldor Topsøe A/S
(86) International application number: PCT/EP2015/060664
(87) International publication number: WO 2015/177034

(56) References cited:
- WO-A2-2010/025241
- WO-A2-2012/166402
- US-A- 4 218 388
- US-A1- 2008 312 480

## Description

Gasification of biomass, waste or coal produces syngas, a gas comprising methane, carbon monoxide, hydrogen, water and carbon dioxide. Syngas may be used as a source of fuel, hydrogen or carbon monoxide. Manipulation of reaction equilibria and reaction conditions influences the ratio of the gaseous products and therefore provides the preferred gas (i.e. methane, hydrogen or carbon monoxide).

Gasification may be carried out above- or under-ground. Gasification of biomass, waste and coal may be carried out using moving bed, fluid bed or entrained flow apparatus for gasification carried out above ground. General gasification techniques are described in: Gasification by Christopher Higman and Maarten van der Burgt GPP, Elsevier Amsterdam 2008. Underground coal gasification is described in http://www.ucgassociation.org

Gasification of biomass, waste and coal may be carried out at temperatures of up to 1800°C [Higman and Maarten van der Burgt]. Biomass & Bioenergy 24 (2003) pp 125-140 discloses that the temperature of such gasification processes not only affects the amount of tar formed, but also the composition of the tar. It has been observed that oxygen containing compounds exist in the tar, in particular as the temperature of the gasification process is reduced. E.g. an increase in oxygen-containing compounds during a sawdust gasification in a fixed bed gasifier was observed at lower gasification temperatures, e.g. 800 °C. In this example the oxygenic species that were observed to be present in significant amounts were phenol, cresol and benzofuran. Oxygen-containing tar components (oxygenic species, oxygenic compounds) may be alcohols, aldehydes, ethers, esters, ketones and organic acids.

Gasification of biomass, waste and coal is carried out in the presence of oxygen to form syngas products such as a gaseous composition of methane, hydrogen and carbon monoxide. This is in comparison to pyrolysis of biomass to form pyrolysis oil, which is carried out in the absence of air (WO2012/166402A2) and produces a liquid composition of products such as carboxylic acids, phenols, cresols, alcohols and aldehydes. Due to the different processes and the products and compositions formed, the gasification product composition comprising oxygenic species is gaseous and the condensed vaporous product of pyrolysis comprising oxygenic species is a liquid.

WO2010/025241 describes processes and reactor systems for the conversion of oxygenated hydrocarbons to paraffins useful as liquid fuels. The process involves the conversion of water soluble oxygenated hydrocarbons to oxygenates, such as alcohols, furans, ketones, aldehydes, carboxylic acids, diols, triols and /or other polyols, followed by the subsequent conversion of the oxygenates to paraffins by dehydration and alkylation. The oxygenated hydrocarbons may originate from any source, but are preferably derived from biomass.

Oxygenic species have higher boiling points compared to their corresponding aromatic and aliphatic hydrocarbons. The higher boiling point may be the cause for condensation in downstream equipment; this influences the phase of the impurities, i.e. solid or liquid phase rather than gaseous phase impurities. Additionally, the oxygenic species are water soluble, and are removed from the product syngas through scrubbing process steps. Therefore existing syngas processes require a subsequent waste water treatment step to remove the oxygenic species present in waste water from scrubbing process steps. Examples of scrubbing steps are present in US 7,618,558 B2.

In order to obtain syngas with reduced oxygenic species (impurities) where the gasification of the biomass, waste or coal is carried out at low temperatures, i.e. up to 1000 °C, there is a need for a process to reduce the amount of oxygenic species present in the syngas. Additionally, the reduction of process steps, such as waste water treatment is desirable.

It has been discovered that oxygenic species may be converted into aliphatic or aromatic hydrocarbons in the presence of a catalyst comprising Co and Mo, Ni and Mo, or Mn and Mo. The conversion of the oxygenic species into hydrocarbons provides impurities with a comparatively low boiling point and that are insoluble in water, consequently reducing the amount of tar and requirement for waste water treatment. The present invention provides a more efficient and consolidated process for conditioning syngas obtainable from the gasification of coal, waste or biomass.

The efficiency of the process of the present invention (and therefore advantage) may be demonstrated by the absence of independent process steps for the addition of a sulphur compound required to activate the catalyst, and the addition of hydrogen to convert the oxygenic compounds to hydrocarbons. Both sulphur compounds and hydrogen are present in the gasification product (syngas) and are therefore not necessary to add to the process of the present invention. Therefore, two process steps, i.e. the activation of the catalyst with the addition of a sulphur compound to the composition comprising oxygenic species and the addition of hydrogen to the reaction, are not required to be added to the process of the present invention.

The invention provides a process for the conversion of one or more oxygenic species (oxygenic compounds) selected from one or more of the group consisting of aldehydes, ketones, ethers, esters, alcohols and organic acids present in syngas, obtainable by gasification of biomass, waste or coal, to one or more hydrocarbon compounds, wherein the oxygenic compounds are brought into contact with (contacted with) a catalyst comprising a combination of metals selected from the group consisting of Co and Mo, Ni and Mo or Mn and Mo. The Mo, Ni and Mn may optionally be in the form of an oxide. The catalyst comprising Co and Mo, Ni and Mo or Mn and Mo further comprises a support selected from the group consisting of Mg-Al₂O₄ spinel, alumina oxide, titanium oxide or zirconium oxide. Examples of such catalysts include the sulphur tolerant shift catalyst from Haldor Topsoe A/S comprising Co and Mo on a Mg-Al₂O₄ support. The sulphur tolerant shift catalyst from Haldor Topsoe A/S is also called an SSK-10 catalyst. An alternative catalyst comprises 2 wt% or less Mn and 7 wt% or less Mo on a Mg-Al₂O₄ support; i.e. the catalyst comprises 2 wt% or less Mn, 7 wt% or less Mo and Mg-Al₂O₄. Catalysts may be prepared according to: Catalyst Manufacture, Second Edition, Alvin B. Stiles, CRC Press, 1995.

The catalysts may be present in pellet or monolith form. The process of the present invention is therefore suitable for use in a dusty or dust-free environment. Preparation of pellet and monolith forms of catalysts are known to the person skilled in the art, exemplary forms and processes of preparation may be found in Catalyst Manufacture, Second Edition, Alvin B. Stiles, CRC Press, 1995.

The oxygenic compounds are obtainable by gasification of biomass, waste or coal. The gasification process may be carried out above- or under-ground. Above-ground gasification of biomass, waste and coal may be carried out using an apparatus selected from the group consisting of moving bed reactor (Lurgi-type reactor), fluid bed apparatus, or a biomass gasifier, including, for example, a pyrolysis unit as described in Gasification by Christopher Higman and Maarten van der Burgt GPP, Elsevier Amsterdam 2008 and 'Biomass Gasification' chapter 4 in 'Alternative Energy in Agriculature' Vol. II, Ed. D. Yogi Goswami CRC Press 1986 pp 83-102.

Underground coal gasification is carried out according to http://www.ucgassociation.org/.

The temperature of the gasification of biomass, waste or coal is 1000 °C or less. The temperature of the gasification of biomass, waste or coal may be 900 °C or less, 800 °C or less, less than 800 °C, 750 °C or less, less than 750 °C, 700 °C or less, less than 700 °C.

After gasification of coal, waste or biomass, the product gas stream (syngas) is optionally cooled to 700°C or less and brought into contact with a catalyst comprising Co and Mo, Ni and Mo or Mn and Mo; the oxygenic compounds are therefore present in the gas stream of the product of the gasification of biomass, waste or coal, i.e. the oxygenic species are present in the product gas stream (syngas). The product gas stream has a temperature of about 300 °C or greater, between 250 °C and 700 °C, between 250 °C and 650 °C, between 250 °C and 600 °C, between 350 °C and 550 °C, between 350 °C and 450 °C, between 350 and 400 °C. The product gas stream has a pressure of between 1 barg and 100 barg, between 2 barg and 100 barg, up to 100 barg, up to 25 barg, up to 20 barg. Gasification by Christopher Higman and Maarten van der Burgt GPP, Elsevier Amsterdam 2008. Barg means overpressure in bar.

The oxygenic compounds comprise compounds selected from the group consisting of aldehydes, ketones, ethers, esters, alcohols and organic acids comprising oxygen. Examples of such oxygenic species comprise iso-propanol, phenol, p-cresol, coumaran, methyl ethyl ketone.

Hydrocarbon compounds include aliphatic and aromatic compounds. Examples of such compounds include methane, ethene, ethane, propene, propane, benzene and toluene.

A catalyst comprising 2wt% or less Mn, 7wt% or less Mo and Mg-Al₂O₄ for the conversion of oxygenic compounds to hydrocarbon compounds and a process of preparing said catalyst are disclosed.

The process of the present invention reduces the content of oxygenic species in the product gas stream (syngas) obtainable by gasification of biomass, waste or coal; consequently, the present invention is suitable for the reduction of oxygenic species present in syngas obtainable by gasification of biomass, waste or coal. The process of reducing the oxygenic species present in syngas may also be called conditioning.

The process of the present invention reduces the content of oxygenic species present in syngas obtainable by gasification of biomass, waste or coal; consequently, as such oxygenic species are a component of tar formed during the gasification process, the present invention is suitable for the reduction of oxygenic species and therefore the reduction of tar formed for the process of preparing syngas obtainable by the gasification of coal, waste or biomass.

### Example 1:

### Conversion of oxygenic species to hydrocarbons using a catalyst comprising Co and Mo on a Mg-Al₂O₄ support.

### Example 1.a.: Catalyst Pre-treatment:

20 g of SSK-10 (catalyst comprising Co and Mo supported on Mg-Al₂O₄) is loaded in a 15 mm ID tube reactor which is heated by five electrical heaters. The catalyst is sulfided in syngas containing 0.7% H₂S first at 150°C and then at 330°C. The catalyst was validated by a shift activity test with a feed containing 28.6% CO, 22.0% H₂, 0.5% H₂S and 48.9% H₂O with a GHSV of 3500h⁻¹, 40 barg at 260°C resulting in an approach to equilibrium at 20°C with the reactor operating at isothermal conditions.

### Example 1.b.: Conversion of Oxygenic Species to Hydrocarbons:

A feed gas was made by mixing two gas streams comprising CO/CO₂/H_{2/}CH₄ and H_{2/}H₂S. Once mixed, the feed gas was passed through a pre heater at 300°C. The feed gas was then mixed with a water feed which had been pre heated to the same temperature. An oxygenic stream comprising the oxygenic species listed in Table 2 was injected into the feed gas stream. The final feed gas composition is given in Tables 1 and 2. The gas stream was then passed over the catalyst described in Example 1.a. at process conditions given in Tables 3 and 4.

After passing the feed gas composition over the catalyst of Example 1.a., the exit gas pressure is reduced to about 1 barg and cooled to about 30 °C, consequently any water is condensed and removed. The liquid and gas fractions are then split into two exit streams: a liquid and a gas stream. The gas and liquid exit streams are analysed separately.

The gas stream was analysed online by FID on an Agilent GC and samples of the liquid and gas streams were measured on a GC-MS(EI) in SCAN-mode: Ion range 29-320 m/z, split injection, split 10:1(liquid) or 20:1 (gas) with injection temperature 275°C, injection volume 0.2µm (liquid) or 1µm (gas), column configuration: HP-INNOWax 60m x 250µm x 0.50 µm.

Two feed gas (syngas) compositions were tested (feed 1 and 2) . The GHSV for feed 1 was 2685h⁻¹ and 3000h⁻¹ for feed 2.

**Table 1: Composition of Syngas Feed in % (H₂S in ppm) :**

| Feed | CO | H₂ | CO₂ | H₂O | H₂S (ppm) | CH₄ | N₂ | Total Oxygenic Species [A+B+C+D+E] |
|---|---|---|---|---|---|---|---|---|
| 1 | 10.8 | 17.20 | 15.5 | 24.7 | 81 | 4.1 | 26.9 | 0.790 |
| 2 | 17.1 | 9.82 | 9.8 | 26.5 | 47 | 5.0 | 31.0 | 0.705 |

**Table 2: Composition of the total oxygenic species in the two feed gases (feed in %):**

| Feed | isopropanol | Phenol | p-cresol | Coumaran | Methyl Ethyl Ketone | Total Oxygenic Species |
|---|---|---|---|---|---|---|
| | [A] | [B] | [C] | [D] | [E] | [A+B+C+D+ E] |
| 1 | 0.518 | 0.131 | 0.126 | 0.012 | 0.003 | 0.790 |
| 2 | 0.463 | 0.117 | 0.113 | 0.010 | 0.002 | 0.705 |

**Table 3: Feed 1 (dry exit gas composition excluding H₂, CO, CO₂, CH₄ and N₂) at varied process conditions:**

| Ex | Temp. (°C) | P (bar g) | C₂H₄ | C₂H₆ | C₃H₆ | C₃H₈ | Benzene | Toluene | Oxygenat e conversion (%) |
|---|---|---|---|---|---|---|---|---|---|
| 1¹ | 350 | 3 | 0.0006 | 0.0000 | 0.2307 | 0.1008 | 0.0137 | 0.0592 | **40** |
| 2² | 350 | 20 | 0.0000 | 0.0041 | 0.0000 | 0.4398 | 0.0227 | 0.0816 | **57** |
| 3 | 450 | 10 | 0.0020 | 0.0141 | 0.1596 | 0.3865 | 0.1056 | 0.1200 | **75** |
| 4³ | 450 | 20 | 0.0000 | 0.0206 | 0.0000 | 0.5617 | 0.1244 | 0.1291 | **81** |

**Table 4: Feed 2 (dry exit gas composition excluding H₂, CO, CO₂, CH₄ and N₂) at varied process conditions:**

| Ex | Temp (°C) | P (bar g) | C₂H₄ | C₂H₆ | C₃H₆ | C₃H₈ | Benzene | Toluene | Oxygenat e conversion (%) |
|---|---|---|---|---|---|---|---|---|---|
| 5 | 450 | 20 | 0.0005 | 0.0186 | 0.0403 | 0.4747 | 0.1200 | 0.1250 | **88** |
| 6 | 450 | 10 | 0.0037 | 0.0100 | 0.2569 | 0.2281 | 0.0904 | 0.1102 | **79** |
| 7 | 450 | 5 | 0.0047 | 0.0023 | 0.3483 | 0.0518 | 0.0578 | 0.0833 | **61** |
| 8 | 450 | 3 | 0.0030 | 0.0010 | 0.3083 | 0.0324 | 0.0353 | 0.0530 | **48** |
| 9 | 450 | 20 | 0.0024 | 0.0250 | 0.1275 | 0.4050 | 0.1035 | 0.1104 | **86** |
| 10¹ | 550 | 20 | 0.0118 | 0.0367 | 0.2094 | 0.3375 | 0.1733 | 0.0894 | **92** |
| 11 | 550 | 10 | 0.0081 | 0.0069 | 0.4197 | 0.0724 | 0.0847 | 0.0430 | **69** |
| 12 | 550 | 5 | 0.0061 | 0.0039 | 0.5792 | 0.0323 | 0.0597 | 0.0318 | **78** |
| 13 | 550 | 2.5 | 0.0041 | 0.0021 | 0.6093 | 0.0000 | 0.0344 | 0.0168 | **73** |
| 14 | 550 | 20 | 0.0094 | 0.0271 | 0.3069 | 0.3318 | 0.1274 | 0.1050 | **∼100** |

Both Tables 3 and 4 illustrate that conversion of the oxygenic species to hydrocarbon species increases with increase temperature and pressure.

Both Tables 3 and 4 also illustrate that reduction of the oxygenic species with hydrogen increases with increased temperature and pressure. For example, iso-propanol is converted to propene and subsequently propane; phenol and p-cresol are converted to benzene and toluene respectively; hydrogenation of the benzene ring is also observed to some extent at high pressure.

### Example 2

### Conversion of oxygenic species to hydrocarbons using a catalyst comprising Mn and Mo on a Mg-Al₂O₄ support.

### Example 2.a.: Catalyst Pre-treatment:

20 g of a catalyst comprising Mn and Mo on Mg-Al₂O₄ spinel is loaded in a 10.7 mm ID tube reactor which is heated by five electrical heaters. The catalyst is sulfided in syngas containing 0.7% H₂S first at 150°C and then at 330°C.

### Example 2.b.: Conversion of Oxygenic Species to Hydrocarbons:

The conversion of oxygenic species to hydrocarbons was repeated as in Example 1.b. with the exception that the catalyst of 2.a. was used. The final feed gas composition is given in Tables 5 and 6 and the process conditions of the reaction are given in Table 7. The GHSV for feed 3 was 2715h⁻¹.

**Table 5: Composition of Syngas Feed in % (H₂S in ppm):**

| Feed | CO | H₂ | CO₂ | H₂O | H₂S (ppm) | CH₄ | N₂ | Total Oxygenic Species [A+B+C+D+E] |
|---|---|---|---|---|---|---|---|---|
| 3 | 9.3 | 6.13 | 12.9 | 24.7 | 61 | 3.1 | 43.0 | 0.904 |

**Table 6: Composition of the total oxygenic species in feed gas 3 (feed in %):**

| Feed | isopropanol | Phenol | pcresol | Coumaran | Methyl Ethyl Ketone | Total Oxygenic Species |
|---|---|---|---|---|---|---|
| | [A] | [B] | [C] | [D] | [E] | [A+B+C+D+ E] |
| 3 | 0.630 | 0.132 | 0.128 | 0.012 | 0.003 | 0.904 |

**Table 7: Feed 3 (dry exit gas composition excluding H₂, CH₄, CO, CO₂, N₂, C₂H₄, C₂H₆, C₃H₆, and C₃H₈) :**

| Ex | Temp. (°C) | P (bar g) | Benzene | Toluene | Oxygenate [B+C] conversion (%) |
|---|---|---|---|---|---|
| 1 | 600 | 2 | 0.2442 | 0.0428 | **89** |

Feed 3 illustrates that reduction of the oxygenic species takes place at the process conditions provided in 2.b. using the catalyst of 2.a. Phenol and p-cresol are converted to benzene and toluene, some toluene dealkylation to benzene also appears to take place.

## Claims

1. A process for the conversion of oxygenic compounds selected from one or more of the group consisting of aldehydes, ketones, ethers, esters, alcohols and organic acids present in syngas, obtainable by gasification of biomass, waste or coal, to one or more hydrocarbon compounds, wherein the oxygenic compounds are contacted with a catalyst comprising metals selected from the group consisting of Co and Mo, Ni and Mo, and Mn and Mo.

2. A process according to claim 1, wherein the catalyst comprises a support selected from one or more of the group consisting of Mg-Al₂O₄ spinel, alumina oxide, titanium oxide and zirconium oxide.

3. A process according to claims 1 and 2, wherein the catalyst comprises 2wt% or less Mn, 7wt% or less Mo and Mg-Al₂O₄.

4. A process according to claims 1 to 3, wherein the catalyst may be present in pellet or monolith form.

5. A process according to claims 1 to 4, wherein the oxygenic compounds are obtainable by underground coal gasification.

6. A process according to claims 1 to 4, wherein the apparatus for use in the gasification according to claims 5 and 6 is a gasifier and the gasifier is selected from the group consisting of moving bed gasifier, fluid bed gasifier, biomass gasifier or pyrolysis unit.

7. A process according to claims 1 to 6, wherein the temperature of the gasification of biomass, waste or coal is 1000 °C or less.

8. A process according to claims 1 to 6, wherein the temperature of the gasification of biomass, waste or coal is 800 °C or less.

9. A process according to claims 1 to 8, wherein the temperature of the process for the conversion of one or more oxygenic compounds to one or more hydrocarbon compounds is 300 °C or greater.

10. Use of a process according to claims 1 to 9 for the reduction of tar formation for the process of preparing syngas from coal, waste or biomass.

## Patentansprüche

1. Verfahren zur Umwandlung von Sauerstoffverbindungen, die ausgewählt sind aus einer oder mehreren aus der Gruppe bestehend aus Aldehyden, Ketonen, Ethern, Estern, Alkoholen und organischen Säuren, die in dem Synthesegas, das durch Vergasung von Biomasse, Abfall oder Kohle erhältlich ist, vorhanden sind, in eine oder mehrere Kohlenwasserstoffverbindungen, wobei die Sauerstoffverbindungen mit einem Katalysator in Kontakt gebracht werden, der Metalle umfasst, die aus der Gruppe bestehend aus Co und Mo; Ni und Mo; und Mn und Mo ausgewählt sind.

2. Verfahren gemäß Anspruch 1, wobei der Katalysator einen Träger umfasst, ausgewählt aus einem oder mehreren aus der Gruppe bestehend aus Mg-Al₂O₄-Spinell, Aluminiumoxid, Titanoxid und Zirconiumoxid.

3. Verfahren gemäß den Ansprüchen 1 und 2, wobei der Katalysator Mg-Al₂O₄, 2 Gew.-% oder weniger Mn und 7 Gew.-% oder weniger Mo umfasst.

4. Verfahren gemäß den Ansprüchen 1 bis 3, wobei der Katalysator in Form von Pellets oder Monolithen vorliegen kann.

5. Verfahren gemäß den Ansprüchen 1 bis 4, wobei die Sauerstoffverbindungen durch unterirdische Kohlevergasung erhältlich sind.

6. Verfahren gemäß den Ansprüchen 1 bis 4, wobei die Vorrichtung zur Verwendung in der Vergasung gemäß den Ansprüchen 5 und 6 ein Vergaser ist und der Vergaser ausgewählt ist aus der Gruppe bestehend aus einem Bewegtbettvergaser, einem Fließbettvergaser, einem Biomassevergaser oder einer Pyrolyseeinheit.

7. Verfahren gemäß den Ansprüchen 1 bis 6, wobei die Temperatur der Vergasung von Biomasse, Abfall oder Kohle 1000 °C oder weniger beträgt.

8. Verfahren gemäß den Ansprüchen 1 bis 6, wobei die Temperatur der Vergasung von Biomasse, Abfall oder Kohle 800 °C oder weniger beträgt.

9. Verfahren gemäß den Ansprüchen 1 bis 8, wobei die Temperatur des Verfahrens zur Umwandlung einer oder mehrerer Sauerstoffverbindungen in eine oder mehrere Kohlenwasserstoffverbindungen 300 °C oder mehr beträgt.

10. Verwendung eines Verfahrens gemäß den Ansprüchen 1 bis 9 zur Verringerung der Teerbildung für das Verfahren zur Herstellung von Synthesegas aus Kohle, Abfall oder Biomasse.

## Revendications

1. Procédé pour la conversion de composés oxygénés, choisis parmi l'un ou plusieurs du groupe constitué par les aldéhydes, les cétones, les éthers, les esters, les alcools et les acides organiques présents dans un gaz de synthèse, pouvant être obtenu par gazéification de biomasse, de déchets ou de charbon, en un ou plusieurs composés hydrocarbonés, les composés oxygénés étant mis en contact avec un catalyseur comprenant des métaux choisis dans le groupe constitué par Co et Mo; Ni et Mo; et Mn et Mo.

2. Procédé selon la revendication 1, le catalyseur comprenant un support choisi parmi l'un ou plusieurs du groupe constitué par le spinelle de Mg-Al₂O₄, l'oxyde d'aluminium, l'oxyde titane et l'oxyde de zirconium.

3. Procédé selon les revendications 1 et 2, le catalyseur comprenant 2% en poids ou moins de Mn, 7% en poids ou moins de Mo et du Mg-Al₂O₄.

4. Procédé selon les revendications 1 à 3, le catalyseur pouvant être présent sous forme de pastilles ou sous forme d'un monolithe.

5. Procédé selon les revendications 1 à 4, les composés oxygénés pouvant être obtenus par gazéification souterraine de charbon.

6. Procédé selon les revendications 1 à 4, l'appareil destiné à être utilisé dans la gazéification selon les revendications 5 et 6 étant un gazéificateur et le gazéificateur étant choisi dans le groupe constitué par un gazéificateur à lit mobile, un gazéificateur à lit fluidisé, un gazéificateur de biomasse ou une unité de pyrolyse.

7. Procédé selon les revendications 1 à 6, la température de la gazéification de biomasse, de déchets ou de charbon étant inférieure ou égale à 1000°C.

8. Procédé selon les revendications 1 à 6, la température de la gazéification de biomasse, de déchets ou de charbon étant inférieure ou égale à 800°C.

9. Procédé selon les revendications 1 à 8, la température du procédé pour la conversion d'un ou de plusieurs composés oxygénés en un ou plusieurs composés hydrocarbonés étant supérieure ou égale à 300°C.

10. Utilisation d'un procédé selon les revendications 1 à 9, pour la réduction de la formation de goudron pour le procédé de préparation de gaz de synthèse à partir de charbon, de déchets ou de biomasse.
